(19) Europäisches Patentamt
European Patent Office
Office européen des brevets

(11) **EP 3 828 743 A1**

(12) **EUROPEAN PATENT APPLICATION**

(43) Date of publication:
**02.06.2021 Bulletin 2021/22**

(51) Int Cl.:
***G06F 21/32*** *(2013.01)*

(21) Application number: **19211667.1**

(22) Date of filing: **26.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **yoursciencebc Ltd**
**Walton-on-Thames, Surrey KT12 3PD (GB)**

(72) Inventors:
• **CAPRIOLI, Domenico**
  **Woking, Surrey GU22 7PY (GB)**
• **COPPOLA, Giuseppe**
  **Woking, Surrey GU22 7PY (GB)**

• **IORIO, Carlo Saverio**
  **Woking, Surrey GU22 7PY (GB)**
• **PERFETTI, Claire**
  **Woking, Surrey GU22 7PY (GB)**
• **ZHAO, Tianheng**
  **Woking, Surrey GU22 7PY (GB)**

(74) Representative: **White, Andrew John et al**
**Mathys & Squire**
**The Shard**
**32 London Bridge Street**
**London SE1 9SG (GB)**

Remarks:
Amended claims in accordance with Rule 137(2) EPC.

(54) **AUTHENTICATION APPARATUS AND METHOD**

(57)    An authentication method comprising obtaining (S101) a first stored user data, SUD, part provided by a user; obtaining (S102) a second SUD part from a storage location (152; 752); combining (S103) the first SUD part and the second SUD part to obtain a combined SUD; obtaining (S104) live user data (154; 756) from the user; comparing (S105) the live user data and the combined SUD; and, determining whether to authenticate (S105) based on the comparison.

Figure 8A

EP 3 828 743 A1

## Description

## Technical Field

The present disclosure relates generally to cybersecurity and more particularly to methods and apparatus for authentication, for example using holographic encryption.

## Background

In the deeply interconnected world of today, un-authorized access to computing systems and/or buildings represent a crucial problem which enterprises, public bodies, security agencies, and armed forces are facing. Authentication systems represent the last stand against identity theft. Authentication technology enables organizations to keep their systems secure by permitting only authenticated users to access its protected resources. In order to increase the reliability and resistance to attack a multifactor authentication approach is used.

Authentication factors used in multifactor authentication systems may be: a knowledge factor (e.g. an information that the user possesses, including a personal identification number (PIN) or, a password; a possession factor (e.g. a credential based on items that the user can own and carry with them, including hardware devices such as a security token); and an inherence factor (e.g. some form of biometric identification, including finger or thumb prints, facial recognition, retina scan). Multifactor authentication systems authenticate users when users provide more than one of the authentication factors.

However, strong multifactor authentication schemes, based on a combination of something users have, know, and/or are, face a number of barriers demanding for trade-offs between: i) Cost, ii) Ease-of-use, iii) Security, and iv) Privacy. Moreover, during authentication, factors provided by the user must be compared to information stored on a server of the authentication system. The main point of failure of authentication systems is the server. The server of authentication systems may be hacked and the authentication factors stored in the server may be obtained by unauthorised users.

There is a need for secure, cost-effective, privacy compliant, and customer-oriented authentication method and system.

## Summary

Aspects of the invention are set out in the independent claims and optional features are set out in the dependent claims. Aspects of the disclosure may be provided in conjunction with each other, and features of one aspect may be applied to other aspects.

In a first aspect of the disclosure there is provided an authentication method comprising: obtaining a first stored user data (SUD) part provided by a user; obtaining a second stored user data part from a storage location; combining the first SUD part and the second SUD part to obtain a combined stored user data; obtaining live user data from the user; comparing the live user data and the combined SUD; and, determining whether to authenticate based on the comparison.

The authentication method may provide an authentication method having improved security.

A typical authentication system may comprise centralised servers which store personal data of users of the system. Typical centralised servers are a single point of failure of typical authentication systems. Hackers (e.g. an unauthorised user of the authentication system) who gain unauthorised access to these centralised servers are able to access personal data of the users. For example, if a hacker (e.g. an unauthorised user of the authentication system) were to gain unauthorised access to the storage location (e.g. a server) the hacker would not have access to a whole SUD, but rather only part of the information needed for authentication, such as a second SUD part. Therefore, embodiments of the first aspect may enable an authentication method of increased security over typical authentication methods/systems.

The authentication method may comprise determining whether to authenticate the user if the live user data and the combined SUD are similar to within a selected error threshold. A selected error threshold may comprise, for example, the live user data and the combined SUD having at least 50% features in common, for example at least 60%, 70%, 80%, 90%, 95% in common.

In some examples, including but not limited to those in which the first and second SUD parts are phase masks (as will be described in more detail below), the second SUD part may contain no meaningful information in isolation from the first SUD part. Therefore, if a hacker gained access to the storage location, they would not obtain any meaningful information about users of the authentication method.

Authentication by the authentication method may grant a user access to a secure area. For example, the secure area may be (but not limited to) any of the following: a computer terminal; a database; a website; a doorway; a storage cupboard; documents; images; networks (e.g. block chains). This may enable sensitive secure areas to be protected from being accessed by unauthorised persons.

The first SUD part, the second SUD part, the whole SUD, the combined SUD the live user data and the initial user data may be a feature matrix.

A feature matrix may be generated by first generating a feature vector from the initial user data. A feature vector is a 1-dimensional numerical array having an arbitrary number of N distinct entries (e.g. an arbitrary size of N). For example, the feature vector may have a size of N=128 or N=256. Feature vectors with a greater size may enable a more secure resulting encryption than feature vectors of a lesser size. Feature vectors with a lesser size may enable faster encryption than feature vectors of a greater size.

If multiple initial user data are obtained for each user, a single feature vector may be produced based on each of these user data for each respective user.

Each of the entries of the feature vector may be normalised so that each entry has a value between 0 and 1.

A wrapping process may be performed on the feature vector to produce a feature matrix. The feature matrix may be a matrix of size M x P having N distinct entries (wherein M·P = N). For example, if the feature vector has a size N=128, the feature matrix may be a matrix of size 16 x 8. The feature matrix and the feature vector may be identical (e.g. N = 128 and M = 1, P = 128 (or M = 128, P = 1)).

The wrapping process may be configurable by an administrator of a system configured to perform the encryption method. The wrapping process may comprise at least one of: rearranging the feature vector into a matrix; shuffling the entries in the feature matrix; adding a random number to the entries (e.g. a random seed may be used to generate the random number).

The feature matrix may be superimposed/convolved with a selected or arbitrary image to produce a final image. The selected or arbitrary image may be selected by an administrator and/or a user of the system - for example it may be a watermark or similar image that can be used as an identifier, for example as an identifier of the organisation or company for which authentication is to be provided. The feature matrix may be represented by a complex component of the final image. For example, each point in the final image can be described as an amplitude part (real part) and a phase part (imaginary part). For example, additional data may be stored as the real or complex component of the final image.

A computer-implemented comparison algorithm (e.g. a neural network) may compare the live user data and combined SUD. The comparison algorithm may use one or more of the following techniques: edge detection; regions of interest; morphing; zipping; eigenfaces; Fourier analysis; k-nearest neighbours algorithm (k-NN). In examples, a neural network may be trained using the Labelled Faces in the Wild (LFW) database published in 2007 and described in "Labeled Faces in the Wild: A database for studying face recognition in unconstrained environments. Technical Report 07-49, University of Massachusetts, Amherst, 2007", Gary B. Huang, Manu Ramesh, Tamara Berg, and Erik Learned-Miller.

The live user data and combined SUD may be deemed similar to within a selected error threshold by the computer-implemented comparison algorithm if the live user data and the combined SUD have: above a selected threshold number of features in common; and/or, have below a selected threshold number of features which are different; and/or below a threshold distance in a feature space between k-nearest neighbours.

The live user data and combined SUD may be deemed dissimilar within an error threshold by the computer-implemented comparison algorithm if the live user data and the combined SUD have: below a selected threshold number of features in common; and/or, have above a selected threshold number of features which are different; and/or above a threshold distance in a feature space between k-nearest neighbours.

The live user data may be an inherence factor, such as biometric data of the user. Advantageously, an inherence factor such as biometric data may be difficult for hackers to fraudulently replicate and therefore may enable increased security of the authentication system. Conveniently, biometric data may be obtained directly from a user (e.g. by obtaining an image of the user etc.) and therefore the user may not need to carry around a device which stores authentication data. Conveniently, biometric data may be obtained directly from a user (e.g. by obtaining an image of the user etc.) and therefore the user may not need to remember live user data (e.g. a password).

The biometric data may be: an image of a user's face; a scan of a user's fingerprint; a recording of a user's voice (e.g. a user reciting a given phrase). The initial user data is of the same form as live user data to be used in the authentication method. For example, if the live user data to be used in the authentication method is an image of the user's face, the initial user data is also an image of the user's face.

Advantageously, biometric data may be difficult for hackers to fraudulently replicate and therefore may increase the security of the authentication system. Conveniently, biometric data may be obtained directly from a user (e.g. by obtaining an image of the user etc.) and therefore the user may not need to carry around a device which stores authentication data. Conveniently, biometric data may be obtained directly from a user (e.g. by obtaining an image of the user etc.) and therefore the user may not need to remember authentication data (e.g. a password). However, in some examples, the authentication system may require a password.

Biometric data may be obtained by an imaging device such as a camera.

For example, two or more cameras may be used to obtain an image of the user. The two or more cameras may be arranged spatially separated from one another in order to allow plural images of the user to be obtained from multiple perspectives. The plural images may be used to generate a digital 3-dimensional model of the user. The digital 3-dimensional model of the user may comprise voxels.

One or more cameras may be configured to obtain an image of the user, the cameras may be configured to allow images of the user to be obtained at multiple wavelengths of light. For example, one or more of the cameras may be configured to image the user at a wavelength within the infrared range (wavelengths of about 1 mm to 700 nm), visible light range (wavelengths of about 700 nm to 400nm) or the ultraviolet light range (wavelengths of about 400 nm to 10 nm). The user may be illuminated by natural light and/or by artificial light sources which emit wavelengths of light within any of the infrared range and/or the visible light range and/or the ultraviolet light range.

The authentication method may comprise obtaining the second SUD part from the storage location based on a user identifier, a user ID, of the user.

A user ID corresponds to a single user of the authentication method. User IDs are unique to each user of the authentication method (e.g. user ID A ≠ user ID B). User IDs may comprise an alphanumeric string of characters having an arbitrary number of characters. The user ID may be input into the security system by a user. Additionally or alternatively a user's user ID may be stored on a security token used exclusively by the user.

In some examples, the user ID of a user X may be the same as: the first SUD part X; a transformed first SUD part X; the second SUD part X; the second transformed SUD part X; the transformed whole SUD. This may enable an authentication method to be provided with a reduced memory requirement (e.g. memory can be saved: at storage locations such as servers and/or in security tokens).

At least one of the first SUD part and the second SUD part may be stored in a transformed form.

Herein the term "transformed" may refer to data which has been hashed (data which has been mapped from a first data set to a second data set by a many-to-1 mapping) or encrypted (data which has been mapped from a first data set to a second data set by a 1-to-1 mapping). For example, the transformation may be any hash function. For example, the transformation may be any cryptographic function. Transforming data may enable further obfuscation of information conveyed by the data resulting in a more secure authentication system.

The authentication method may comprise obtaining plural live user data from the user and combining the plural live user data into a single live user data.

The plural live data and the single live user data may be feature matrix. The single live user data may comprise a summation of the plural live user data. The single live user data may comprise a mean average of each component of the plural live user data. For example the (M,P)th element of each of the plural live user data are summed together and then a mean average is obtained, wherein the mean average becomes the (M,P)th element of the single live user data.

The authentication method may comprise performing a liveness test on the live user data and determining if the live user data is fraudulent; and, preventing authentication of the user if the live user data is fraudulent.

The liveness test may comprise: comparing live user data to an expected live user data; and, determining the live user data to be fraudulent if the live user data is not similar to the expected live user data to within a selected error threshold.

The liveness test may be performed by a neural network.

The liveness test may comprise requesting a user to perform a requested act. For example, the live user data to be obtained may be an image of the user's face. In such examples, the requested act may be a smile. The requested act may be performed by the user as live user data is obtained. An expected live user data may comprise an expected set of features to be identified in the live user data. For example, if the requested act is a smile, the expected live user data may comprise a set of features indicative of a smile. The obtained live user data may be a video of the user. A determination of the similarity between the live user data and the expected live user data may performed. For example the live user data and the expected live user data may be similar to within a selected threshold error. A computer-implemented algorithm may fail to detect the expected live user data in the live user data then the live user data may considered fraudulent and the authentication may be prevented.

The liveness test may comprise obtaining live user data from a user. For example, the live user data to be obtained may be an image of the user's face by a camera of the authentication system. A computer-implemented algorithm (e.g. neural network) may operate on the live user data to determine if the live user data is fraudulent. For example, the computer-implemented algorithm may be able to differentiate between images of a user's face taken of a user in real-time and images of a user's face taken of a further image of a user (e.g. an image obtained from a phone screen held in front of the camera of an authentication system). For example, the computer-implemented algorithm may be able to ascertain differences in reflection of light from a user's face in real-time and an image shown on a phone screen. Images which are not of a user's face taken of a user in real-time are considered fraudulent.

An authentication system may be configured to raise an alarm based on a distress input of the user. A user may provide a distress input if they are under duress. The distress input may prompt an authentication system to alert the administrator and/or the local emergency services. The distress input may prompt the authentication system to lock and/or shut down the user-end terminal. The distress input may comprise an alphanumerical code input into the user-end terminal. The distress input may comprise a facial gesture input obtained by a camera operatively coupled to the user-end terminal. This may enable users under duress to receive aid from local emergency services.

The authentication method may comprise: obtaining a transformed whole SUD from a storage location; transforming the combined SUD to create a transformed combined SUD; comparing the transformed combined SUD with the transformed whole SUD and preventing authentication of the user if the transformed combined SUD with the transformed whole SUD are not similar. This may enable an additional authentication step to be provided which may enable a more secure authentication method to be provided. These steps of the authentication method may be performed before or after the step of obtaining the live user data from a user.

An alarm may be sounded if the authentication method prevents authentication of the user. This may enable hackers to be identified at a user-end terminal of the authentication system. This may act as a deterrent to would-be hackers.

It will be understood that the first SUD part and the second SUD part may be combined to form a combined SUD. The first SUD part and the second SUD part may be combined optically, for example by use of the optical arrangement described herein. Additionally or alternatively the first SUD part and the second SUD part may be combined digitally. Additionally or alternatively the first SUD part and the second SUD part may be combined by a computer-implemented combining algorithm. The computer-implemented combining algorithm may be an inverse process to a computer-implemented splitting algorithm. For example, the first SUD part and the second SUD part obtained by a given computer-implemented splitting algorithm $\alpha$ acting on a whole SUD, may be combined using a computer-implemented combining algorithm $\alpha^{-1}$ which may act on the first SUD part and the second SUD part to return a combined SUD which is identical to the whole SUD.

A second aspect of the disclosure provides a method of generating a first SUD part and a second SUD part for use in the authentication method according to the first aspect, the method comprising: generating a whole SUD based on the initial user data; splitting the whole SUD into a first SUD part and a second SUD part. It will be understood that the whole SUD may be split into a first SUD part and a second SUD part using a computer-implemented splitting algorithm.

The whole SUD may be split into a first SUD part and a second SUD part by optical holography, for example, by any methods and/or apparatus described herein. The whole SUD may be split into a first SUD part and a second SUD part digitally, for example, by a computer-implemented splitting algorithm. In examples wherein the whole SUD is a feature matrix (e.g. an M x P matrix wherein M.P = N) the splitting algorithm may be represented as one or more matrix which operates on the whole SUD to generate the first SUD part and the second SUD part. The first SUD part and the second SUD part may also be feature matrix (e.g. vectors or matrices).

The splitting algorithm may be configured to take selected elements of the whole SUD in accordance to a first selected order of selection and use the value of each element to generate an element of the first SUD part, the splitting algorithm may then take the previously unselected elements of the whole SUD in accordance to a second selected order of selection and use the value of each element to generate an element of the second SUD part. The value of each element may be operated on by an injective function (including an identity function which outputs a number identical to an input number) to generate an element of the first SUD part and/or the second SUD part. The total number of elements in the first SUD part and the second SUD part is N. The first SUD part and the second SUD part may individually have the same number of elements (e.g. the first SUD part has N/2 elements and the second SUD part has N/2 elements).

The method of the second aspect for generating a first SUD part and a second SUD part may allow the authentication method of the first aspect to be performed. Therefore the method of the second aspect may provide an authentication system having improved security to be provided.

The method for generating a first SUD part and a second SUD part may comprise splitting the whole SUD into a first SUD part and a second SUD part by holographic encryption.

At least one of the first SUD part and the second SUD part may be phase masks. This may enable an enhanced authentication method to be provided. For example, illuminating a phase mask with a suitable light source does not enable information encoded by the phase mask to be seen by the human eye because the phase component of light is undetectable by the human eye.

The method for generating a first SUD part and a second SUD part may comprise: storing the first SUD part on a security token; and, storing the second SUD part in a storage location. Accordingly, the method for generating a first SUD part and a second SUD part may provide an authentication method having improved security.

A typical authentication system may comprise centralised servers which store personal data of users of the system. Typical centralised servers are a single point of failure of typical authentication systems. Hackers (e.g. an unauthorised user of the authentication system) who gain unauthorised access to these centralised servers are able to access personal data of the users. For example, if a hacker (e.g. an unauthorised user of the authentication system) were to gain unauthorised access to the storage location (e.g. a server) the hacker would not have access to a whole SUD, but rather a second SUD part. Therefore, embodiments of the second aspect may enable an authentication of increased security.

In some examples, including but not limited to those in which the first and second SUD parts are phase masks, the second SUD part contains no meaningful information in isolation from the first SUD part. Therefore, if a hacker gained access to the storage location, they would not obtain any meaningful information about users of the authentication system.

In a third aspect there is provided an authentication system for implementing the method of any of the first aspect or second aspect comprising: a server configured to store the SUD second part; a user-end terminal configured to: receive the SUD first part provided by a user; and obtain live user data from the user.

In a fourth aspect there is provided a computer program product comprising instructions which, when the program is executed by a computer, cause the computer to carry out the method according to the first aspect.

In a fifth aspect there is provided a computer program product comprising instructions which, when the program is executed by a computer, cause the computer to carry out the method according to the second aspect.

Aspects of the disclosure may be used by enterprises to restrict access to secure areas such as: confidential information; hazardous locations (e.g. access to a nuclear power plant; use of potentially dangerous equipment); data (e.g. patents, industrial designs, contracts).

Aspects of the disclosure may be used by governmental agencies to restrict access to secure areas such as: facilities and/or buildings (e.g. military bases, government buildings, airport control centers).

Aspects of the disclosure may be used to prevent "Economic espionage" and "Industrial Espionage".

Figures

Some embodiments will now be described, by way of example only, with reference to the figures, in which:

Figure 1A is a flowchart of an example authentication method;

Figure 1B is a schematic view of an example system for performing the authentication method of Figure 1A;

Figure 2 shows an example method of holographic encryption optionally for use with the method of Figure 1A;

Figure 3 is a flowchart of an example method for generating phase masks optionally for use with the method of Figure 1A;

Figure 4 is a schematic view of an example optical arrangement for performing holography optionally for use with the method of Figure 1A;

Figure 5A is a flowchart of an example method of generating a first SUD part and a second SUD part;

Figure 5B is a schematic view of an example system for performing the method of generating a first SUD part and a second SUD part of Figure 5A;

Figures 6A, 6B, 6C show schematic views of example database structures optionally for use with the method of Figures 1A and 5A;

Figure 7A is a flowchart of an example method of generating a first SUD part and a second SUD part;

Figure 7B is a schematic view of an example system for performing the method of generating a first SUD part and a second SUD part of Figure 7A;

Figure 8A is a flowchart of another example authentication method;

Figure 8B is a schematic view of an example system for performing the authentication method of Figure 8A.

In the drawings like reference numerals are used to indicate like elements.

**Specific Description**

Embodiments of the disclosure provide an authentication method comprising: obtaining a first SUD part provided by a user; obtaining a second SUD part from a storage location; combining the first SUD part and the second SUD part to obtain a combined SUD; obtaining live user data from a user; comparing the live user data and the combined SUD and authenticating the user if the live user data and the combined SUD are similar within an error threshold.

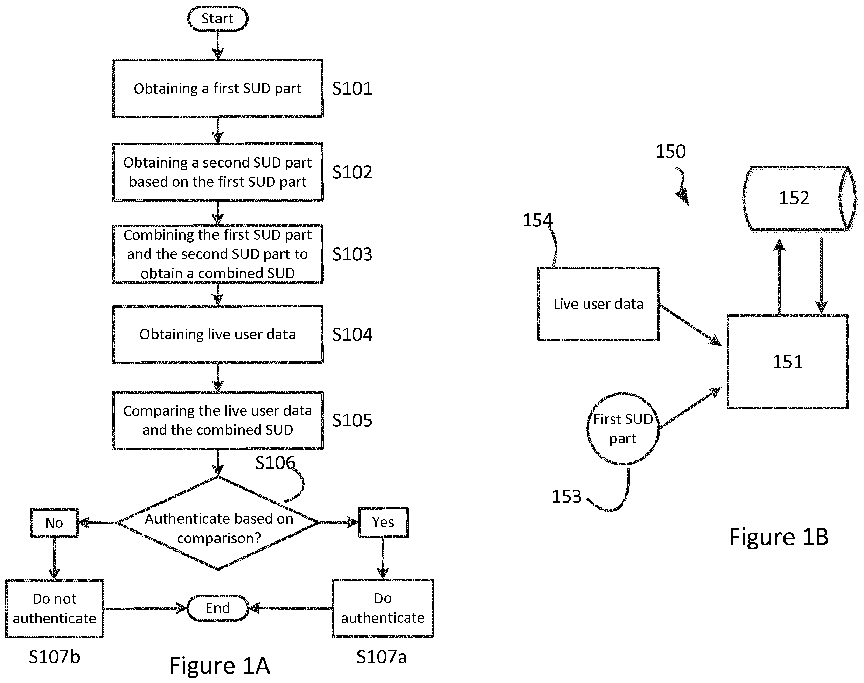

Figure 1A is a flowchart of an authentication method; Figure 1B is a schematic view of a system for performing the authentication method of Figure 1A.

The authentication system 150 comprises a user-end terminal 151, and a server 152 that are configured to communicate with each other over a network such as a telecommunications network. A first stored user data part 153 (hereinafter referred to as a first SUD part) and live user data 154 are provided to the authentication system 150 by a user, for example by presentation of a security token such as a card. It will be understood that the user-end terminal 151 will have means to read the user data part 153 and the live user data 154, for example the user-end terminal 151 may comprise a reader such as a card reader for receiving the first stored user data part 153, and a camera for obtaining the live user data 154.

The user-end terminal 151 and/or the server 152 may be computers. The first SUD part 153 and the live user data 154 may be digital data in any format.

An authentication method is now described with reference to the authentication system 150.

Obtain S101, the first SUD part provided by a user.

The user-end terminal 151 is configured to obtain the first SUD part 153 provided by the user.

Obtain S102, the second stored user data part (hereinafter referred to as a second SUD part) from a storage location.

The server 152 is configured to store the second SUD part at a storage location at the server. The storage location may be a database.

The user-end terminal 151 is configured to obtain the second SUD part from the storage location at the server 152. The user-end terminal may request the second SUD data from the server 152. The user-end terminal may request the second SUD part from the server 152 by sending a database query to the server 152. The server 152 may be configured to return the requested second SUD part to the user-end terminal 151.

Combine S103, the first SUD part and the second SUD part to obtain a combined stored user data (hereinafter referred to as a combined SUD).

The user-end terminal 151 is configured to combine the first SUD part and the second SUD part to obtain a combined SUD. The first SUD part and the second SUD part may be combined by an algorithm performed by the user-end terminal.

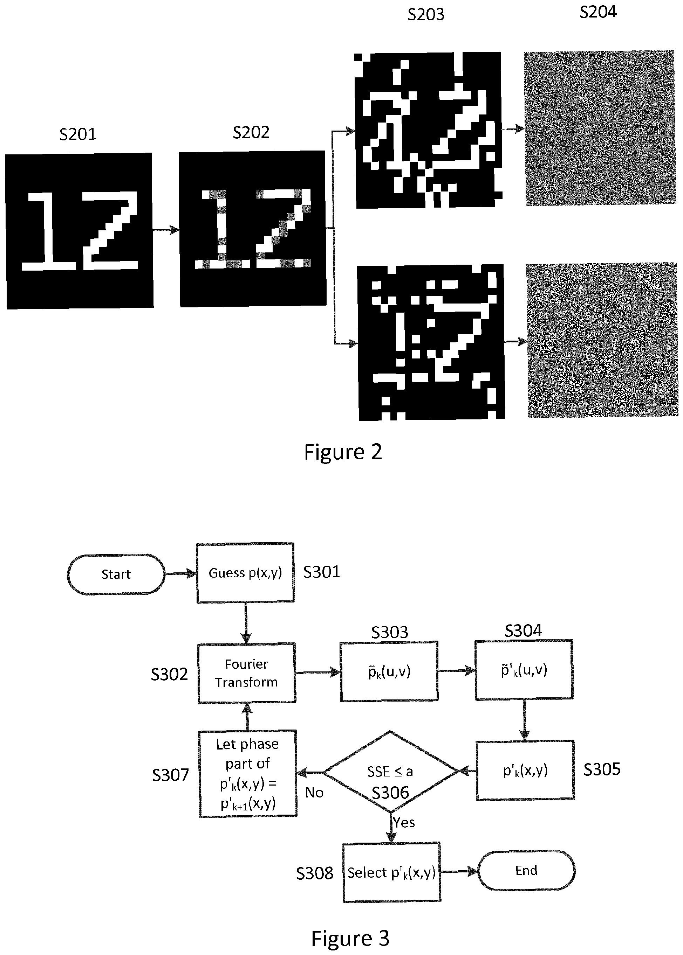

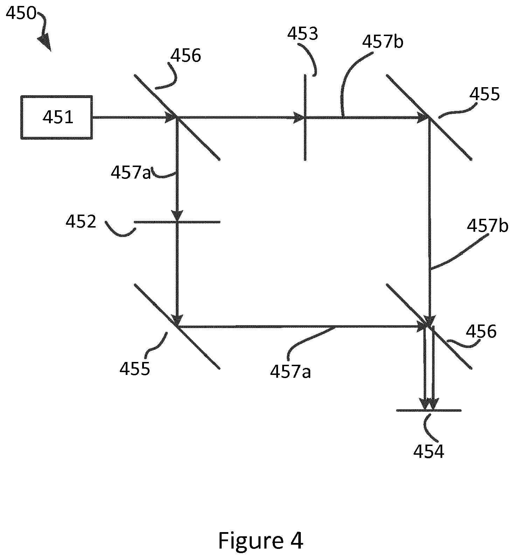

In some examples, the first SUD part 153 may be sent to the server 152 by the user-end terminal 151. The second SUD part may be obtained at the server. The server may be configured to combine the first SUD part and the second SUD part to obtain a combined SUD. The first SUD part and the second SUD part may be combined by an algorithm performed by the server, for example as described below with reference to Figures 3 and 4.

Obtain S104, live user data from a user.

The user-end terminal 151 is configured to obtain live user data 154.

The live user data may be biometric data. The live user data supplied by the user may be the same type of data as combined SUD provided by the user in the encryption method described above.

In the example shown, the live user data is obtained in real-time (e.g. live) from a user who is using the authentication system 150. The initial user data may be a personal identification number (PIN). Additionally or alternatively the initial user data may be biometric data obtained from the user. For example, the biometric data may be: an image of a user's face; a scan of a user's fingerprint; a recording of a user's voice (e.g. a user reciting a given phrase). The live user data may be obtained by any appropriate means. For example: an image of a user's face may be obtained using a camera; a scan of a user's fingerprint may be obtained using a fingerprint scanner; a recording of a user's voice may be obtained using a microphone.

Compare S105, the live user data and the combined SUD.

The user-end terminal 151 is configured to compare the live user data and the combined SUD. The user-end terminal may use an algorithm to compare the live user data and the combined SUD.

In some examples, the server 152 may be configured to compare the live user data and the combined SUD. The server may use an algorithm to compare the live user data and the combined SUD.

Determines S106, whether to authenticate based on the comparison.

The user-end terminal 151 is configured to determine whether to authenticate based on the comparison. The user-end terminal may be configured to authenticate if the live user data and the combined SUD are similar to within a selected error threshold.

In some examples, the server 152 may be configured to determine whether to authenticate based on the comparison. The server may be configured to authenticate if the live user data and the combined SUD are similar to within a selected error threshold.

The live user data and the combined SUD are in an identical data format.

Either, do authenticate S107a, if the comparison indicates the live user data and the combined SUD are similar to within a selected error threshold.

If the authentication system 150 does authenticate based on the comparison, the user may be granted access to a secure area. For example, the secure area may be any of the following: a computer terminal; a website; a doorway; a storage cupboard.

Or, do not authenticate S108b, if the comparison indicates the live user data and the combined SUD are not similar to within a selected error threshold.

If the authentication system 150 does not authenticate based on the comparison, the user may not be granted access to the secure area.

Figure 2 shows a method of holographic encryption; Figure 3 is a flowchart of a method for generating phase masks.

Data may be split in to two or more stored user parts (e.g. first SUD part; second SUD part; third SUD part etc.) by a variety of different methods.

Data may be split into two or more parts by holographic encryption. Holographic encryption may be performed digitally (e.g. by a computer) or optically (e.g. using a light source and optics). The two types of holographic encryption can be performed so as to obtain at least two phase masks.

Holography enables the acquisition and the reconstruction of a complex light field, by means of interference. The complex light field may comprise an amplitude and/or a phase distribution of light. The complex light field obtained by reflecting light from a three-dimensional (3D) object enables a 3D representation of the object to be obtained.

In both cases the 3D representation of the object obtained by holography can be split (e.g. decomposed) into two or more masks. Recombination of the masks allows the original 3D representation of the object to be recovered.

Computer-generated holography (CGH) is a technique used for obtaining a complex light field by numerical calculation. Given digital data indicative of light reflected from a 3D scene, the complex light field is calculated by a computer (e.g. using diffraction theory). The calculated complex light field can be processed for numerical interference with a virtual reference wave to yield the interference pattern, or it can be encoded in various ways for efficient optical reconstruction using holographic 3D displays.

Figure 2 shows a method of holographic encryption that may be performed by the system 150 shown in Figure 1B and in the method of Figure 1A described above.

Obtain S201, data to be split. The data may be in any digital format. The data may be an image (e.g. a bitmap). The data may be a feature matrix. In the example shown in Figure 2 the data is a bitmap which displays the number '12'.

Optionally, if the digital data is an image, expand S202 the pixels using a set of rules which introduce a predetermined amount of distortion to the original image to obtain a distorted image.

Generate S203 two or more amplitude masks such that the superposition of the amplitude masks recovers the original data. In examples wherein the optional step S202 is implemented the superposition of the amplitude masks recovers the distorted image.

Generate S204 a phase mask for each amplitude mask. The phase masks may each encode all of the information contained in respective amplitude masks.

Figure 3 is a flowchart of a method for generating phase masks.

A method of generating phase masks is as follows.

Guess S301 the phase distribution of a phase mask, p(x,y), to describe an initial data described by the distribution S(x,y) (wherein x, and y are coordinates which adequately describe a two-dimensional spatial position of the phase distribution).

Fourier transform S302 the phase mask for a kth iteration, $p_k(x,y)$ to obtain S303, the Fourier transform of the phase mask for a kth iteration:

$$FT\{p_k(x,y)\} = \tilde{p}_k(u,v) = |\tilde{p}_k(u,v)|e^{i\varphi_k(u,v)}$$

Replace the modulus of the Fourier transform of the phase mask for the kth iteration from S303, to obtain S304 a transformed altered phase mask for the kth iteration $\tilde{p}$':

$$\tilde{p}_k'(u,v) = [|S(u,v)| + (1-\beta)|\tilde{p}_k(u,v)|]e^{i\varphi_k(u,v)}$$

Where $|\tilde{s}(u,v)|$ is the distribution of the initial data to be encoded by a final phase mask of the method and β is an adjustment factor that may be any natural number such that $0 \le \beta \le 2$.

Inverse Fourier transform the transformed altered phase mask for the kth iteration $\tilde{p}$' to obtain S305 an altered phase mask for the kth iteration:

$$FT^{-1}\{\tilde{p}_k'(u,v)\} = p_k(x,y) = |p_k'(x,y)|e^{i\theta'_k(x,y)}$$

Evaluate S306 the sum square error (SSE) between $|\check{s}(u,v)|$ and $|p_{k+1}(x,y)|$ and determine if the SSE is less than or equal to a threshold error value a.

If the SSE is less than or equal to a threshold error value a then obtain S308 $p_{k+1}(x,y)$ as the desired phase mask and end the algorithm.

If the SSE is less than or equal to a threshold error value a then continue to S307.

$$SSE[|\tilde{p}_k(u,v)|, |\check{s}(u,v)|] \leq a$$

Conserve S307 the phase part of kth iteration $\tilde{p}'$ to obtain altered phase mask for the kth iteration.

$$p_k(x,y) = e^{i\theta'_k(x,y)}$$

Alternatively, an initial data may split in an arbitrary manner into two or more parts. The arbitrary manner may be determined by an administrator of an authentication system. The two or more parts may be encrypted as a phase mask. For example, if the two parts comprise binary data, '0' may be encoded as a clockwise spin state of a photon and '1' may be encoded as an anticlockwise spin state of a photon.

The phase masks may be stored on digital media (e.g. in a storage location of a computing device) and/or physical media (e.g. as a hologram).

Phase masks stored on digital media may be stored in any digital format. Phase masks stored on digital media may be recombined by a computing device. For example, CGH may be used to recombine the phase masks and/or reconstruct the information encoded therein.

A method of generating a CGH using a Fourier transform method is described above. Alternative methods may use a "point source" method. The point source method is based on the point source concept (first described in: "HOLOGRAPHIC IMAGE SYNTHESIS UTILIZING THEORETICAL METHODS" Appl. Phys. Lett. 9, 405, Waters (1966)). In the point source method, an object is broken down into a number of self-luminous points. An elementary hologram is calculated for each of the self-luminous points and a final hologram is synthesized by superimposing all of the elementary holograms.

Figure 4 is a schematic view of an optical arrangement for performing holography, for example for use with the methods of Figures 2 and 3 described above.

The information encoded in phase masks may be reconstructed using an optical system. An example optical system 450 is shown in Figure 4. The optical system comprises: a light source 451, a spatial light modulator (SLM) 452, a physical hologram 453, a detector 454, mirrors 455 and beam splitters 456. Light beams 457a and 457b are also shown in Figure 4.

The light source 451 is configured to illuminate the SLM 452 and the physical hologram 453. The light source may be coherent. For example, the light source may be a laser.

The SLM 452 is configured to receive a first phase mask stored on digital media and display a hologram of the first phase mask. The SLM is configured to modify incident light such that the reflected/diffracted light reproduces a complex light field encoded by the first phase mask.

The physical hologram 353 is a hologram of the second phase mask stored on physical media. The physical hologram is configured to modify incident light such that the reflected/diffracted light reproduces a complex light field encoded by the second phase mask.

The detector 454 is configured to detect light incident on the detector. The detector may be configured to detect the amplitude of light incident on the detector. The detector may be configured to detect the phase of light incident on the detector. The detector may comprise charge-coupled device (CCD). The detector may comprise appropriate filters (e.g. polarization filters and/or quarter-wave plates and/or half-wave plates).

The mirrors 455 are configured to direct light in the optical system 450.

The beam splitters 456 are configured to split light from the light source 451 into an appropriate number of split beams. The beam splitters 456 are configured to recombine the split beams. In some examples, a single beam splitter may be provided.

In examples of the optical system 450 with a coherent light source 451, the system is configured so that the phase difference between different light beams arriving at the detector may be zero. For example, the path length of the light beams 457a and 457b may be the same or the path length of the light beams 457a and 457b may differ by an integer number of wavelengths of the light.

Optionally the system may comprise only SLMs. Optionally the system may comprise only physical holograms. In examples wherein there are more than two phase masks the system may comprise any appropriate number and combination of SLMs and physical holograms.

Information encoded in phase masks stored on digital media may be physically recovered by displaying the phase mask using a spatial light modulator (SLM) and directing a coherent light source (e.g. a laser) at the SLM and subsequently recovering, by a detector (e.g. a CCD).

In use, light is emitted from the light source 451 towards a first beam splitter which splits the light into split light beams 475a and 457b. Light beam 457a is directed towards the SLM 452 which displays a hologram of the first phase mask. Light beam 457a is modified to reconstruct the complex light field of encoded by the first phase mask. Split beam 457b is directed towards the physical hologram 453. Split beam 457b is modified to reconstruct the complex light field encoded by the second phase mask. The modified light beams 457a and 457b are directed by mirrors to a second beam splitter 356 wherein the split beams are recombined to form a recombined beam. The second beam splitter directs the recombined beam to the detector 354. The detector detects the incident recombined light. The detector may be coupled to a computing device which obtains the original data represented by the phase masks.

Phase masks may be superimposed with an arbitrary amplitude mask.

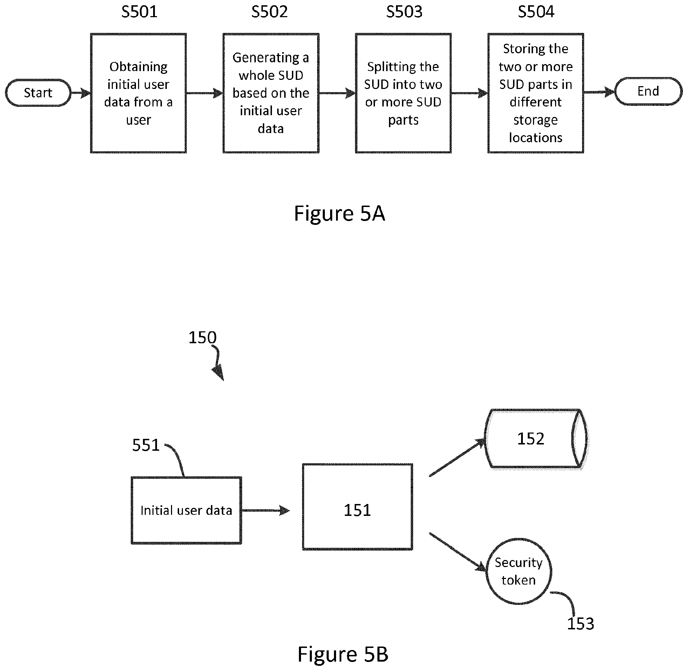

Figure 5A is a flowchart of a method of generating a first SUD part and a second SUD part, for example for use with the method of Figure 1A; Figure 5B is a schematic view of a system for performing the method of generating a first SUD part and a second SUD part of Figure 5A;

The authentication system 150, as previously described, comprises a user-end terminal 151, a server 152 and a security token 153. An initial user data 551 is provided to the authentication system 150 by a user.

The user-end terminal 151 is configured to obtain initial user data from the user. The user-end terminal is configured to write data to the security token 153. The user-end terminal is configured to read data from the security token. The user-end terminal may be configured to write data onto a memory device carried by the security token. The user-end terminal may comprise a memory for storing first SUD parts of users of the authentication system 150. The user-end terminal may be configured to send data packets to the server and to receive data packets from the server.

The server 152 is configured to store a second SUD part. The server comprises a memory location for storing the second SUD part. The server may be configured to send data packets to the user-end terminal 151 and to receive data packets from the user-end terminal.

The security token 153 is configured to store a first SUD part. The security token may be configured to store data of a user of the authentication system, the stored data identical to or indicative any of combination of the following: a user ID of a user; a second SUD part; a transformed first SUD; a transformed SUD.

Herein the term "transformed" may refer to data which has been hashed (data which has been mapped from a first data set to a second data set by a many-to-1 mapping) or encrypted (data which has been mapped from a first data set to a second data set by a 1-to-1 mapping). For example, the transformation may be any hash function. For example, the transformation may be any cryptographic function. Transforming data may enable further obfuscation of information conveyed by the data resulting in a more secure authentication system.

In some examples, at least some of the data stored on the security token 153 may be stored in physical media (e.g. not in a digital format). For example, any data may be stored on the security token as text and/or at least one of the stored data may be stored on the security token as a hologram. The user-end terminal may be configured to read analogue data from a user token (e.g. the user-end terminal may comprise an appropriate optical arrangement for reading the analogue data). For example, the user-end terminal may comprise an optical arrangement for reading holograms as shown in Figure 4 which is described in detail above. Optionally, the stored data may be a in the form of phase mask. For example, the first SUD part and/or the second SUD part and/or the whole SUD part may be stored as a phase mask.

The data stored on the security token 153 may be stored in digital media. The stored data may be digital data of any format. The stored data may be stored in a memory device carried by the security token. The security token may comprise an inductive coil configured to receive power from an alternating magnetic field generated by the user-end terminal 151. The security token may comprise a transmitter configured to transmit a signal carrying the any of the stored data. The user-end terminal may comprise a receiver configured to receive a signal transmitted by a security token.

The security token may be a smart card or an alarm fob.

An encryption method is now described.

Obtain S501, initial user data 551 from a user.

The initial user data 551 is obtained by the user-end terminal 151. The initial user data is obtained by any of the methods described herein with regards to live user data and/or biometric data.

The initial user data may be a personal identification number (PIN). The initial user data may be biometric data obtained from the user. For example, the biometric data may be: an image of a user's face; a scan of a user's fingerprint; a recording of a user's voice (e.g. a user reciting a given phrase). The initial user data is of the same form as the live user data to be used in the authentication method. For example, if the live user data to be used in the authentication method is an image of the user's face, the initial user data is also an image of the user's face.

Generate S502, whole stored user data (hereinafter referred to as a whole SUD) based on the initial user data 551. The whole SUD may comprise any data format. The whole SUD may comprise a feature matrix based on the initial user data. The feature matrix may comprise data capable of undergoing digital holography.

Split S503, the whole SUD into two or more SUD parts.

The whole SUD may be split using any method described herein. The whole SUD may be split into SUD parts by holographic encryption, for example, such as those holographic encryption methods described herein.

Store S504, the two or more SUD parts in different storage locations.

A security token 153 may be configured to store the first SUD part. For example, the security token may be configured to store the first SUD by any of the means described herein.

In some examples, a security token 153 may not be provided. Instead the first SUD part may be stored at a storage location at the authentication system 150. For example, the first SUD part may be stored on the user-end terminal 151 or on the server 152.

The first SUD part stored on the security token 153 may be stored as digital data of any format.

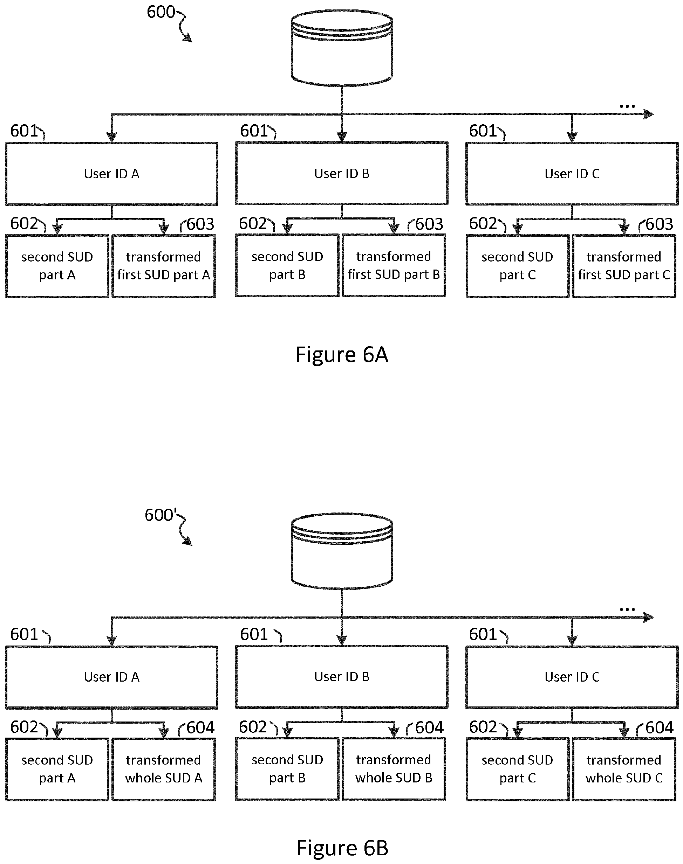

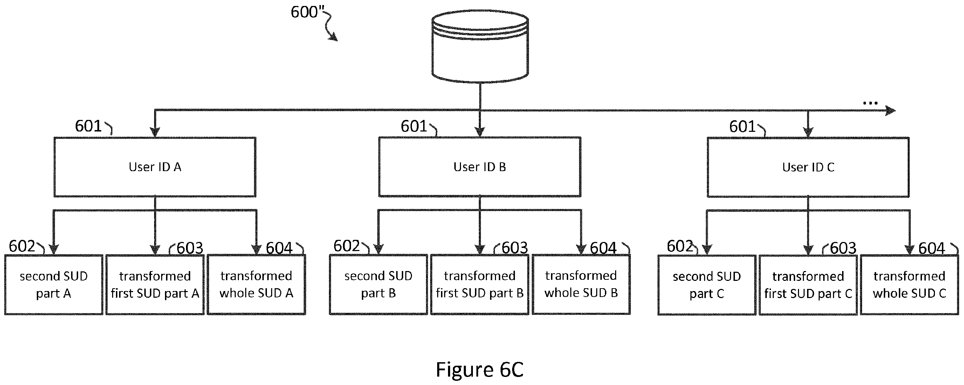

A second SUD part may be stored at a storage location of the authentication system 150. The storage location may be at the user-end terminal 151 of the authentication system. The storage location may be at a server 152 of the authentication system. The storage location may comprise a database. The database may be structured in accordance to the structures shown in Figures 6A, 6B, and 6C which are described herein.

In examples wherein a security token 153 is not provided and the first SUD part is stored on either the user-end terminal 151 or the server 152, the second SUD part is stored in a different location to the first SUD part. For example, if the first SUD part is stored at the user-end terminal 151, then the second SUD part is stored at the server 152.

The second SUD part may be stored in an unaltered form and/or a transformed form.

Figures 6A, 6B, 6C show schematic views of database structures;

Figure 6A shows a database structure 600 of the storage location of the authentication system 650 comprising, user IDs 601, second SUD parts 602, transformed first SUD parts 603 and transformed SUDs 604 .

The database structure may include a directory containing plural user IDs 601. Each of the user IDs corresponds to a single user of a authentication system. For example, the system may be used by two users: user A and user B. The directory comprises two user IDs, user ID A and user ID B corresponding to user A and user B respectively. Each new user of the authentication system may have a user ID added to the directory. For example, a new user C may use the authentication system and a user ID C may be added to the directory. The directory subsequently contains: user ID A; user ID B; user ID C.

User IDs 601 are unique to each user of the authentication system (e.g. user ID A ≠ user ID B). User IDs may comprise an alphanumeric string of characters having an arbitrary number of characters. A user's user ID may be stored on a security token 153 used exclusively by the user. For example, as described herein the user's security token may be configured to allow a user's user ID to be read by a user-end terminal of the authentication system. User IDs may be entered into a user-end terminal of the authentication system by users.

In some examples, the user ID of a user X may be the same as: the first SUD part X; a transformed first SUD part X; the second SUD part X; the second transformed SUD part X; the transformed whole SUD.

The user ID 601 of a user may be configured to be a reference to the second SUD part of the user. For example, the user ID of user X (user ID X) is a reference to the second SUD part of user X (second SUD part X).

In some examples the second SUD part 602 may be stored in a transformed form.

Authentication systems may be configured to store the transformed whole SUD 604 associated with each individual user of the authentication system. Each of the transformed whole SUDs 604 may be stored in the server at a location referenced by the user ID of the individual user. For example, the transformed whole SUD of user X may be stored in the server at a location referenced by the user ID of user X (user ID X). Each of the transformed whole SUDs may be stored in a server of an authentication system at a location referenced by the second SUD part of the individual user. For example, the transformed whole SUD of user A may be stored in the server at a location referenced by the second SUD part of user A (second SUD part A).

In use, an authentication system may receive from a user-end terminal, a user ID X of user X and a first SUD part X. The authentication sends the user ID X and the first SUD part X to a server of the authentication system. The server searches the directory in the database for user ID X.

If user ID X cannot be found in the directory, the server returns an error message to the user-end terminal.

If user ID X can be found in the directory, the server dereferences user ID X to locate second SUD part X. The first SUD part X and the second SUD part X are combined to generate a combined SUD X.

It will be understood that the first SUD part and the second SUD part may be combined optically, for example by use of the optical arrangement described herein. The first SUD part and the second SUD part may be combined digitally. The first SUD part and the second SUD part may be combined by a computer-implemented combining algorithm. The computer-implemented combining algorithm may be an inverse process to a computer-implemented splitting algorithm. For example, the first SUD part and the second SUD part obtained by a given computer-implemented splitting algorithm $\alpha$ acting on a whole SUD, may be combined using a computer-implemented combining algorithm $\alpha^{-1}$ which may act on the first SUD part and the second SUD part to return a combined SUD which is identical to the whole SUD.

Optionally, the server may hash the combined SUD X to obtain a transformed combined SUD X. The server may dereference either user ID X or second SUD part X to obtain stored transformed whole SUD X. The server may then compare the transformed combined SUD X and the transformed whole SUD X. If the transformed combined SUD X and the transformed whole SUD X are not similar to within a selected error threshold, then the server may return an error message to the user-end terminal. If the transformed combined SUD X and the stored transformed whole SUD X are similar to within a selected error threshold then the authentication system authenticates.

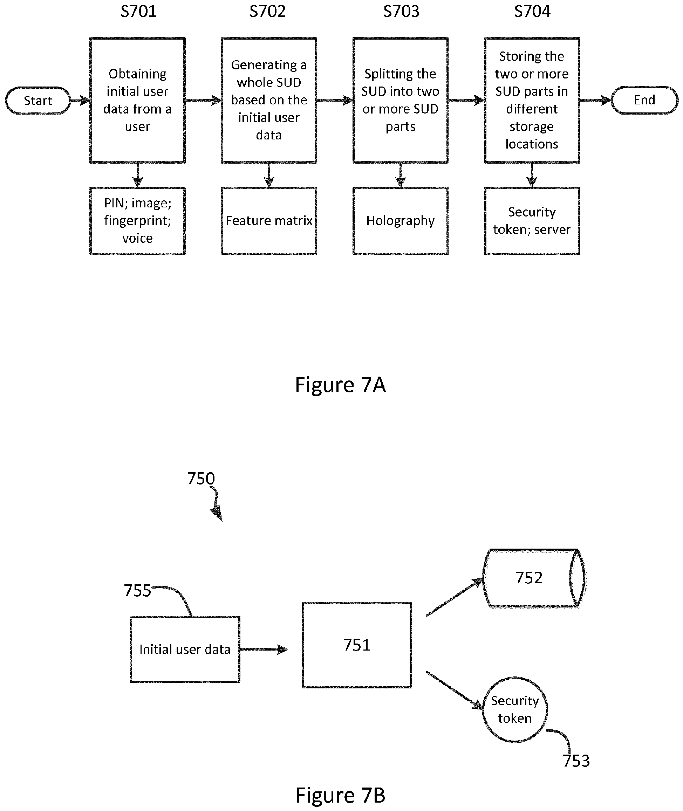

Figure 7A is a flowchart of a method of generating a first SUD part and a second SUD part, for example for use with the method of Figure 1A; Figure 7B is a schematic view of a system for performing the method of generating a first SUD part and a second SUD part of Figure 7A.

The authentication system 750 shown in Figure 7B comprises a user-end terminal 751, a server 752 and a security token 753. The user-end terminal 751 and server 752 may be configured to communicate with each other over a network, such as a telecommunications network. An initial user data 751 is provided to the authentication system 750 by a user.

The user-end terminal 751 is configured to obtain initial user data 755 from the user. The user-end terminal is configured to write data to the security token 753. The user-end terminal is configured to read data from the security token. The user-end terminal may be configured to write data onto a memory device carried by the security token. The user-end terminal may comprise a memory for storing first SUD parts of users of the authentication system 150. The user-end terminal may be configured to send data packets to the server 752 and to receive data packets from the server. The user end terminal may comprise an optical arrangement such as that shown in Figure 4 and described herein.

The server 752 is configured to store a second SUD part. The server comprises a memory location for storing the second SUD part. The server may be configured to send data packets to the user-end terminal 751 and to receive data packets from the user-end terminal.

The security token 753 is configured to store a first SUD part. The security token may be configured to store data of a user of the authentication system, the stored data identical to or indicative any of combination of the following: a user ID of a user; a second SUD part; a transformed first SUD; a transformed SUD.

In some examples, at least some of the data stored on the security token 753 may be stored in physical media (e.g. not in a digital format). For example, any data may be stored on the security token as text and/or at least one of the stored data may be stored on the security token as a hologram. The user-end terminal may be configured to read analogue data from a user token (e.g. the user-end terminal may comprise an appropriate optical arrangement for reading the analogue data). For example, the user-end terminal may comprise an optical arrangement for reading holograms as shown in Figure 4 which is described in detail herein. Optionally, the stored data may be a in the form of phase mask. For example, the first SUD part and/or the second SUD part and/or the whole SUD part may be stored as a phase mask. The data stored on the security token 753 may be stored in digital media. The stored data may be digital data of any format. The stored data may be stored in a memory device carried by the security token. The security token may comprise an inductive coil configured to receive power from an alternating magnetic field generated by the user-end terminal 751. The security token may comprise a transmitter configured to transmit a signal carrying the any of the stored data. The user-end terminal may comprise a receiver configured to receive a signal transmitted by a security token.

The security token 752 may be a smart card or an alarm fob.

An encryption method as shown in Figure 7a and that may be performed by the system shown in Figure 7B is now described by way of example only.

Obtain S701, initial user data from a user.

The initial user data is obtained by the user-end terminal 751. The initial user data is obtained by any of the methods described above or below with regards to the live user data.

The initial user data may be a personal identification number (PIN). The initial user data may be biometric data obtained from the user. For example, the biometric data may be: an image of a user's face; a scan of a user's fingerprint; a recording of a user's voice (e.g. a user reciting a given phrase). The initial user data is of the same form as the live user data to be used in the authentication method. For example, if the live user data to be used in the authentication method is an image of the user's face, the initial user data is also an image of the user's face.

The user-end terminal 751 may receive an image of a user as initial user data (and also as live user data). The user-end terminal may receive the image from a camera operatively coupled to the user-end terminal.

Two or more cameras may be used by the system to obtain an image of the user. The two or more cameras may be arranged spatially separated from one another in order to allow plural images of the user to be obtained from multiple perspective. The plural images may be used to generate a digital 3-dimensional model of the user. The digital 3-dimensional model of the user may comprise voxels.

One or more cameras may be configured to obtain an image of the user, the cameras may be configured to allow images of the user to be obtained at multiple wavelengths of light. For example, one or more of the cameras may be configured to image the user at a wavelength within the infrared range (wavelengths of about 1 mm to 700 nm), visible light range (wavelengths of about 700 nm to 400nm) or the ultraviolet light range (wavelengths of about 400 nm to 10 nm). The user may be illuminated by natural light and/or by artificial light sources which emit wavelengths of light within any of the infrared range and/or the visible light range and/or the ultraviolet light range.

Generate S702, a whole SUD based on the initial user data 755. The whole SUD may comprise any data format. The whole SUD may comprise a feature matrix based on the initial user data. The feature matrix may comprise data capable of undergoing digital holography.

The generated whole SUD may be stored at a storage location of the authentication system 750 in a transformed form (transformed whole SUD). The transformed whole SUD may be stored at the user-end terminal 751. The transformed whole SUD may be stored at the server 752. The transformed whole SUD may be stored at the security token 753.

A feature matrix may be generated by first generating a feature vector from the initial user data 755. A feature vector is a 1-dimensional numerical array having an arbitrary number of N distinct entries (e.g. an arbitrary size of N). For example, the feature vector may have a size of N=128 or N=256. Feature vectors with a greater size may provide a more secure resulting encryption than feature vectors of a lesser size. Feature vectors with a lesser size provide may allow faster encryption than feature vectors of a greater size.

If multiple initial user data 755 are obtained a single feature vector is produced based on each of these user data.

Each of the entries of the feature vector may be normalised so that each entry has a value between 0 and 1.

A wrapping process may be performed on the feature vector to produce a feature matrix. The feature matrix may be a matrix of size M x P having N distinct entries (wherein M·P = N). For example, if the feature vector has a size N=128, the feature matrix may be a matrix of size 16 x 8. The feature matrix and the feature vector may be identical (e.g. N = 128 and M = 1, P = 128 (or M = 128, P = 1)).

The wrapping process may be configurable by an administrator of a system configured to perform the encryption method. The wrapping process may comprise: rearranging the feature vector into a matrix; shuffling the entries in the feature matrix (for example by rearranging the entries in the feature matrix, for example in a random manner); adding a random number to the entries (e.g. a random seed may be used to generate the random number).

The feature matrix may be superimposed/convolved with an arbitrary image to produce a final image. The arbitrary image may be selected by an administrator and/or a user of the system. The feature matrix may be represented by a complex component of the final image. For example, each point in the final image can be described as an amplitude part (real part) and a phase part (imaginary part). For example, additional data may be stored as the real or complex component of the final image.

Split S703, the whole SUD into two or more SUD parts.

The whole SUD may be split using any method described herein. The whole SUD may be split into SUD parts by holographic encryption, for example, such as those holographic encryption methods described herein.

In some examples, the whole SUD may be split into three or more SUD parts (e.g. first SUD part, second SUD part and third SUD part) . The third SUD part may be stored separately from both of the first and second SUD parts. For example, the third SUD part may be stored on an additional server (not shown).

Store S704, the two or more SUD parts in different storage locations.

A security token 753 may be configured to store the first SUD part, for example, in any of the ways described herein.

In some examples, a security token 753 is not provided. Instead the first SUD part may be stored at a storage location at the authentication system 450. For example, the first SUD part may be stored on the user-end terminal 451 or on the server 752.

The first SUD part stored on the security token may be stored as digital data of any format.

A second SUD part may be stored in a storage location of the authentication system 750. The storage location may be at the user-end terminal 751 of the authentication system. The storage location may be at a server 752 of the authentication system.

In examples wherein a security token 753 is not provided and the first SUD part is stored on either the user-end terminal 751 or the server 752, the second SUD part is stored in a different location to the first SUD part. For example, if the first SUD part is stored at the user-end terminal 751, then the second SUD part is stored at the server 752.

The second SUD part may be stored in an unaltered form and/or a transformed form.

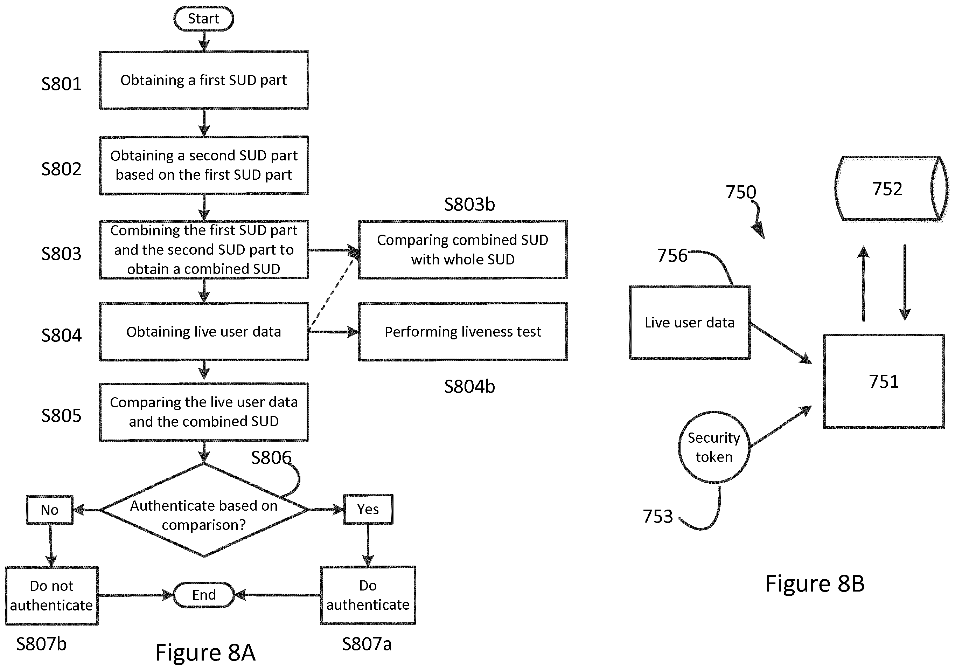

Figure 8A is a flowchart of an example authentication method; Figure 8B is a schematic view of a system for performing the authentication method of Figure 8A.

The authentication system 750 comprises a user-end terminal 751, a server 752. A first SUD part 753 and live user data 756 are provided to the authentication system 750 by a user.

An authentication method as shown in Figure 8A and that may be performed by the system of Figure 8B is now described by way of example only with reference to an authentication system 750 shown in Figure 8B.

Obtain S801, the first SUD part provided by a user.

The first SUD part is stored on a security token 753.

In examples wherein a security token 753 is not provided, the first SUD part may be stored at a storage location at the authentication system 750. For example, the first SUD part may be stored on the user-end terminal 751 or on the server 752.

Obtain S802, the second SUD part from a storage location.

The user-end terminal 751 is configured to obtain the first SUD part from the security token 753.

The storage location may be at the user-end terminal 751 of the authentication system 750. The storage location may be at a server 752 of the authentication system.

The second SUD part may be located at the storage location by any database querying method. The second SUD part may be located at the storage location using a user ID as described above. The database of the server 752 is structured in accordance to the structure shown in Figure 6C which is described herein.

In other examples, the database of the server 752 may be structured in any of the manners described herein. For example, the database may be structured in accordance to the structure shown in Figures 6A and 6B which are described herein.

In the example shown in Figure 7B, the user-end terminal obtains the second SUD part from the server 752.

In some examples, a third SUD part may be obtained from the server 752 or an additional server. The first SUD part, second SUD part, and third SUD part are combined to obtain a combined SUD.

Combine S803, the first SUD part and the second SUD part to obtain a combined SUD.

The combination is performed at the server 752 of the authentication system 750. For example, the user-end terminal 751 of the authentication system may read and send the first SUD part to the server. The first SUD part and the second SUD part are then combined at the server.

Alternatively, the combination may be performed at a user-end terminal 751 of the authentication system 751. For example, the user-end terminal 751 of the authentication system may request the second SUD part from the server 752. The server may send the second SUD part to the user-end terminal. The first SUD part and the second SUD part may then be combined at the user-end terminal.

For example, the first SUD part and the second SUD part may be combined optically, for example by use of the optical arrangement described herein. The first SUD part and the second SUD part may be combined digitally. The first SUD part and the second SUD part may be combined by a computer-implemented combining algorithm. The computer-implemented combining algorithm may be an inverse process to a computer-implemented splitting algorithm. For example, the first SUD part and the second SUD part obtained by a given computer-implemented splitting algorithm $\alpha$ acting on a whole SUD, may be combined using a computer-implemented combining algorithm $\alpha^{-1}$ which may act on the first SUD part and the second SUD part to return a combined SUD which is identical to the whole SUD.

In examples, the first and second SUD parts may comprise first and second phase masks respectively. The first and second phase masks may be generated by according to methods described herein. The first and second phase masks may be read and combined according to any of the methods described herein.

If the authentication method comprises further SUD parts (e.g. a third SUD part), the further SUD parts may comprise phase masks.

The step of combining may include combining any additional SUD parts (e.g. a third SUD part, a fourth SUD part) in accordance with the previously described combination techniques.

Optionally, comparing S803b a combined SUD with a whole SUD. The whole SUD may be stored on the server, for example, in accordance with any of the database structures shown in Figures 6A to 6C described herein. The whole SUD may be stored on the user-end terminal. The whole SUD may be stored on the security token 753. The whole SUD is stored in a transformed form.

In some examples the live user data 756 may be sent to the server 752. The live user data may be compared to the combined SUD and/or the whole SUD. If the live user data and the combined SUD are not similar to within a selected error threshold, then the server may return an error message to the user-end terminal. If the live user data and the whole SUD are not similar to within a selected error threshold, then the server may return an error message to the user-end terminal.

Obtain S804, live user data 756 from a user. The live user data may be biometric data. The live user data supplied by the user is of the same type of data as the initial user data provided by the user in the encryption method described above.

The user-end terminal 751 is configured to obtain live user data from the user. The user-end terminal may obtain the live user data by any of the means described above with respect to obtaining initial user data.

Optionally, perform S80b a liveness test on the live user data 756.

The authentication system 750 may be configured to verify if the live user data 756 obtained is fraudulent. For example, the live user data obtained by the authentication system may be an image of the user's face, in which case, the user-end terminal 751 or the server 752 may carry out one or more of the following acts (e.g. liveness tests): requesting a user to smile; requesting a user to rotate their head; using shadows on a user's face. The liveness test may be carried out by a neural network.

The liveness test may comprise requesting a user to perform a requested act. For example, the live user data to be obtained may be an image of the user's face. In such examples, the requested act may be a smile. The requested act may be performed by the user as live user data is obtained. An expected live user data may comprise an expected set of features to be identified in the live user data. For example, if the requested act is a smile, the expected live user data may comprise a set of features indicative of a smile. The obtained live user data may be a video of the user. A determination of the similarity between the live user data and the expected live user data may performed. For example the live user data and the expected live user data may be similar to within a selected threshold error. A computer-implemented algorithm may fails to detect the expected live user data in the live user data then the live user data may considered fraudulent and the authentication may be prevented.

The authentication system 750 may be configured to raise an alarm based on a distress input of the user. A user may provide a distress input if they are under duress. The distress input may prompt the authentication system to alert the administrator and/or the local emergency services. The distress input may prompt the authentication system to lock and/or shut down the user-end terminal. For example, the distress input may comprise an alphanumerical code input into the user-end terminal. For example, the distress input may comprise a facial gesture input into the user-end terminal.

Compare S805, the live user data 756 and the combined SUD.

The user-end terminal 751 is configured to compare the live user data 756 and the combined SUD. The user-end terminal 751 may be use an algorithm to compare the live user data and the combined SUD.

In some examples, the server 752 may be configured to compare the live user data 756 and the combined SUD. The server 752 may be use an algorithm to compare the live user data and the combined SUD.

Determines S806, whether to authenticate based on the comparison.

The user-end terminal 751 is configured to determine whether to authenticate based on the comparison. The user-end terminal may be configured to authenticate if the live user data 756 and the combined SUD are similar to within a selected error threshold.

In some examples, the server 752 may be configured to determine whether to authenticate based on the comparison. The server may be configured to authenticate if the live user data 756 and the combined SUD are similar to within a selected error threshold.

The live user data 756 and the combined SUD are in an identical data format.

Either, do authenticate S807a, if the comparison indicates the live user data 756 and the combined SUD are similar to within a selected error threshold.

If the authentication system 750 does authenticate based on the comparison, the user may be granted access to a secure area. For example, the secure area may be any of the following: a computer terminal; a website; a doorway; a storage cupboard.

Or, do not authenticate S808b, if the comparison indicates the live user data 756 and the combined SUD are not similar to within a selected error threshold.

If the authentication system 750 does not authenticate based on the comparison, the user may not be granted access to the secure area.

If the user ID the live user data and the combined SUD are not similar within an error threshold the user is not authenticated S807b.

As noted above, the whole SUD may be split into a first SUD part and a second SUD part. The whole SUD may be split into a first SUD part and a second SUD part by optical holography, for example, by any methods and/or apparatus described herein. The whole SUD may be split into a first SUD part and a second SUD part digitally, for example, by a computer-implemented splitting algorithm. In examples wherein the whole SUD is a feature matrix (e.g. an M x P matrix wherein M.P = N) the splitting algorithm may be represented as one or more matrix which operates on the whole SUD to generate the first SUD part and the second SUD part. The first SUD part and the second SUD part may also be feature matrix (e.g. vectors or matrices).

The splitting algorithm may be configured to take selected elements of the whole SUD in accordance to a first selected order of selection and use the value of each element to generate an element of the first SUD part, the splitting algorithm may then take the previously unselected elements of the whole SUD in accordance to a second selected order of selection and use the value of each element to generate an element of the second SUD part. The value of each element may be operated on by an injective function (including an identity function which outputs a number identical to an input number) to generate an element of the first SUD part and/or the second SUD part. The total number of elements in the first SUD part and the second SUD part is N. The first SUD part and the second SUD part may individually have the same number of elements (e.g. the first SUD part has N/2 elements and the second SUD part has N/2 elements)

A specific example of such a splitting algorithm may be as follows:

obtain feature matrix (hereinafter referred to as "FM") having size M x P (wherein M.P = N) which represents the whole SUD;
generate an empty vector 1SUDP corresponding to the first SUD part;
if the number of elements of 1SUDP is less than N/2 then:
select the (M,P)th element of FM which satisfies the following conditions:

the element has not already been selected;
the sum of M and P is even;
the sum of M and P is the smallest of the elements not already selected;
if there is more than one element which fulfils the previous conditions;
select the element for which the value of M is less than P;
append the selected element to the end of 1SUDP;
generate an empty vector 2SUDP corresponding to the second SUD part;
if the number of elements of 2SUDP is less than N/2 then:
select the (M,P)th element of FM which satisfies the following conditions:

the element has not already been selected;
the sum of M and P is odd;
the sum of M and P is the smallest of the elements not already selected;
if there is more than one element which fulfils the previous conditions;
select the element for which the value of M is less than P; append the selected element to the end of 2SUDP;
obtain 1SUDP and 2SUDP.

The first SUD part and the second SUD part may combined to generate a combined SUD. The first SUD part and the second SUD part may be combined to generate a combined SUD by optical holography, for example, by any methods and/or apparatus described herein. The first SUD part and the second SUD part may be combined to generate a combined SUD digitally, for example, by a computer-implemented combining algorithm. In examples wherein the first SUD part and the second SUD part are feature matrix (e.g. each vectors of size N/2) the combining algorithm may be represented as one or more vectors which operate, by means of an outer product, on the first SUD part and the second SUD part to generate a combined SUD which may be a feature matrix (e.g. matrix of size M x P wherein M.P =N).

The combining algorithm may be configured to take selected elements of the first SUD part in accordance to a first selected order of selection and use the value of each element to generate an element of the combined SUD, the combining algorithm may then take selected elements of the second SUD part in accordance to a second selected order of selection and use the value of each element to generate an element of the combined SUD. The value of each element may be operated on by an injective function (including an identity function which outputs a number identical to an input number) which is the inverse function to the injective function used in a splitting algorithm (described herein) to generate an element of the combined SUD. The total number of elements in the combined SUD is N. The first SUD part and the second SUD part may individually have the same number of elements (e.g. the first SUD part has N/2 elements and the second SUD part has N/2 elements).

A specific example of such a combining algorithm may be as follows:

generate an empty feature matrix (hereinafter referred to as "FM") having size M x P (wherein M.P = N) which represents the combined SUD;
obtain a vector 1SUDP corresponding to the first SUD part;
select the first-most element of 1SUDP which has not been previously selected and insert this element at the (M, P)th element of FM which satisfies the following conditions:

the element of FM has not already been selected;
the sum of M and P is even;
the sum of M and P is the smallest of the elements not already selected;
if there is more than one element which fulfils the previous conditions;
select the element for which the value of M is less than P;
continue until all of the elements of 1SUDP has been selected;
obtain a vector 2SUDP corresponding to the second SUD part;
select the first-most element of 2SUDP which has not been previously selected and insert this element at the (M,P)th element of FM which satisfies the following conditions:

the element of FM has not already been selected;
the sum of M and P is odd;
the sum of M and P is the smallest of the elements not already selected;
if there is more than one element which fulfils the previous conditions;
select the element for which the value of M is less than P; continue until all of the elements of 2SUDP has been selected; obtain FM.

The specific example of the combining algorithm is the inverse of the specific example of the splitting algorithm described herein.

Certain features of the methods described herein may be implemented in hardware, and one or more functions of the apparatus may be implemented in method steps. It will also be appreciated in the context of the present disclosure that the methods described herein need not be performed in the order in which they are described, nor necessarily in the order in which they are depicted in the drawings. Accordingly, aspects of the disclosure which are described with reference to products or apparatus are also intended to be implemented as methods and vice versa. The methods described herein may be implemented in computer programs, or in hardware or in any combination thereof. Computer programs include software, middleware, firmware, and any combination thereof. Such programs may be provided as signals or network messages and may be recorded on computer readable media such as tangible computer readable media which may store the computer programs in non-transitory form. Hardware includes computers, handheld devices, programmable processors, general purpose processors, application specific integrated circuits (ASICs), field programmable gate arrays (FPGAs), and arrays of logic gates.

Any computer-implemented algorithms described herein may be any suitable neural network. For example, the neural network may be a k-nearest neighbour algorithm.

Any processors used in the computer system (and any of the activities and apparatus outlined herein) may be implemented with fixed logic such as assemblies of logic gates or programmable logic such as software and/or computer program instructions executed by a processor. The computer system may comprise a central processing unit (CPU) and associated memory, connected to a graphics processing unit (GPU) and its associated memory. Other kinds of programmable logic include programmable processors, programmable digital logic (e.g., a field programmable gate array (FPGA), a tensor processing unit (TPU), an erasable programmable read only memory (EPROM), an electrically erasable programmable read only memory (EEPROM), an application specific integrated circuit (ASIC), or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data store of the computer system (and any of the apparatus outlined herein).

Other examples and variations of the disclosure will be apparent to the skilled addressee in the context of the present disclosure.

**Claims**

1. An authentication method comprising:

> obtaining (S101) a first stored user data, SUD, part provided by a user;
> obtaining (S102) a second SUD part from a storage location (152; 752);
> combining (S103) the first SUD part and the second SUD part to obtain a combined SUD;
> obtaining (S104) live user data (154; 756) from the user;
> comparing (S105) the live user data and the combined SUD; and,
> determining whether to authenticate (S105) based on the comparison.

2. The authentication method according to claim 1, wherein the live user data (154; 756) is biometric data of the user.

3. The authentication method according to any preceding claim, wherein obtaining the second SUD part from the storage location (152; 752) is based on a user identifier, a user ID, of the user.

4. The authentication method according to any preceding claim, wherein the second SUD part is stored in a transformed form.

5. The authentication method according to any preceding claim, comprising:
obtaining plural live user data from the user and combining the plural live user data into a single live user data.

6. The authentication method according to any preceding claim, comprising:

> performing a liveness test on the live user data (154; 756) and determining if the live user data is fraudulent; and,
> preventing authentication of the user if the live user data (154; 756) is fraudulent.

7. The authentication method according to claim 6, wherein the liveness test comprises:

comparing live user data (154; 756) to an expected live user data; and,
determining the live user data (154; 756) to be fraudulent if the live user data is not similar to the expected live user data to within a selected error threshold.

8. The authentication method according to any of claims 6 to 7 wherein the liveness test is performed by a neural network.

9. The authentication method according to any preceding claim, comprising:

obtaining a transformed whole SUD from a storage location;
transforming the combined SUD to obtain a transformed combined SUD;
comparing the transformed combined SUD with the transformed whole SUD and preventing authentication of the user if the transformed combined SUD with the transformed whole SUD are not similar to within a selected error threshold.

10. A method of generating a first SUD part and a second SUD part for use in the authentication method according to any of claims 1 to 9, the method comprising:

generating a whole SUD, based on an initial user data (551);
splitting the whole SUD into a first SUD part and a second SUD part.

11. The method of claim 10, wherein splitting the whole SUD into a first SUD part and a second SUD part is by holographic encryption.

12. The method according to claim 11, wherein the first SUD part and the second SUD part are phase masks.

13. The method according to any of claims 10 to 12 comprising:

storing the first SUD part on a security token (153; 753); and,
storing the second SUD part in a storage location (152; 752).

14. An authentication system for implementing the method of any preceding claim comprising:

a server (152; 752) configured to store the SUD second part;
a user-end terminal (151; 751) configured to:

receive the SUD first part provided by a user; and
obtain live user data (154; 756) from the user.

15. A computer program product comprising instructions which, when the program is executed by a computer, cause the computer to carry out the method of any preceding claim.


**Amended claims in accordance with Rule 137(2) EPC.**

1. An authentication method comprising:

obtaining (S101) a first stored user data, SUD, part provided by a user;
obtaining (S102) a second SUD part from a storage location (152; 752) ;
combining (S103) the first SUD part and the second SUD part to obtain a combined SUD;
obtaining (S104) live user data (154; 756) from the user;
comparing (S105) the live user data and the combined SUD; and,
determining whether to authenticate (S105) based on the comparison;
obtaining a transformed whole SUD from a storage location;
transforming the combined SUD to obtain a transformed combined SUD;
comparing the transformed combined SUD with the transformed whole SUD and preventing authentication of the user if the transformed combined SUD with the transformed whole SUD are not similar to within a selected error threshold.

**2.** The authentication method according to claim 1, wherein the live user data (154; 756) is biometric data of the user.

**3.** The authentication method according to any preceding claim, wherein obtaining the second SUD part from the storage location (152; 752) is based on a user identifier, a user ID, of the user.

**4.** The authentication method according to any preceding claim, wherein the second SUD part is stored in a transformed form.

**5.** The authentication method according to any preceding claim, comprising:
obtaining plural live user data from the user and combining the plural live user data into a single live user data.

**6.** The authentication method according to any preceding claim, comprising:

performing a liveness test on the live user data (154; 756) and determining if the live user data is fraudulent; and,
preventing authentication of the user if the live user data (154; 756) is fraudulent.

**7.** The authentication method according to claim 6, wherein the liveness test comprises:

comparing live user data (154; 756) to an expected live user data; and,
determining the live user data (154; 756) to be fraudulent if the live user data is not similar to the expected live user data to within a selected error threshold.

**8.** The authentication method according to any of claims 6 to 7 wherein the liveness test is performed by a neural network.

**9.** A method of generating a first SUD part and a second SUD part for use in the authentication method according to any of claims 1 to 8, the method comprising:

generating a whole SUD, based on an initial user data (551);
splitting the whole SUD into a first SUD part and a second SUD part.

**10.** The method of claim 9, wherein splitting the whole SUD into a first SUD part and a second SUD part is by holographic encryption.

**11.** The method according to claim 10, wherein the first SUD part and the second SUD part are phase masks.

**12.** The method according to any of claims 9 to 11 comprising:

storing the first SUD part on a security token (153; 753); and,
storing the second SUD part in a storage location (152; 752) .

**13.** An authentication system for implementing the method of any preceding claim comprising:

a server (152; 752) configured to store the SUD second part;
a user-end terminal (151; 751) configured to:

receive the SUD first part provided by a user; and
obtain live user data (154; 756) from the user.

**14.** A computer program product comprising instructions which, when the program is executed by a computer, cause the computer to carry out the method of any preceding claim.

Figure 1B

150

152

151

Live user data

154

First SUD part

153

Figure 1A

Start

S101 — Obtaining a first SUD part

S102 — Obtaining a second SUD part based on the first SUD part

S103 — Combining the first SUD part and the second SUD part to obtain a combined SUD

S104 — Obtaining live user data

S105 — Comparing the live user data and the combined SUD

S106 — Authenticate based on comparison?

Yes → S107a — Do authenticate

No → S107b — Do not authenticate

End

S203                   S204

S201               S202

Figure 2

Start → | Guess p(x,y) | S301

S303             S304

S302 | Fourier Transform | → $\tilde{p}_k(u,v)$ → $\tilde{p}'_k(u,v)$

S307 | Let phase part of $p'_k(x,y)$ = $p'_{k+1}(x,y)$ | ← SSE ≤ a  No | S306 | ← $p'_k(x,y)$ | S305

Yes

S308 | Select $p'_k(x,y)$ | → End

Figure 3

Figure 4

S501        S502        S503        S504

```
Start → | Obtaining      | → | Generating a   | → | Splitting the  | → | Storing the    | → End
        | initial user   |   | whole SUD      |   | SUD into two   |   | two or more    |
        | data from a    |   | based on the   |   | or more SUD    |   | SUD parts in   |
        | user           |   | initial user   |   | parts          |   | different      |
        |                |   | data           |   |                |   | storage        |
        |                |   |                |   |                |   | locations      |
```

Figure 5A

150

551

Initial user data → 151 → 152

151 → Security token

153

Figure 5B

600

| User ID A | |
|---|---|
| 601 | |

| second SUD part A | transformed first SUD part A |
|---|---|
| 602 | 603 |

| User ID B | |
|---|---|
| 601 | |

| second SUD part B | transformed first SUD part B |
|---|---|
| 602 | 603 |

| User ID C | |
|---|---|
| 601 | |

| second SUD part C | transformed first SUD part C |
|---|---|
| 602 | 603 |

...

Figure 6A

600'

| User ID A | |
|---|---|
| 601 | |

| second SUD part A | transformed whole SUD A |
|---|---|
| 602 | 604 |

| User ID B | |
|---|---|
| 601 | |

| second SUD part B | transformed whole SUD B |
|---|---|
| 602 | 604 |

| User ID C | |
|---|---|
| 601 | |

| second SUD part C | transformed whole SUD C |
|---|---|
| 602 | 604 |

...

Figure 6B

600"

| 601 | 601 | 601 |
|---|---|---|
| User ID A | User ID B | User ID C |

| 602 | 603 | 604 | 602 | 603 | 604 | 602 | 603 | 604 |
|---|---|---|---|---|---|---|---|---|
| second SUD part A | transformed first SUD part A | transformed whole SUD A | second SUD part B | transformed first SUD part B | transformed whole SUD B | second SUD part C | transformed first SUD part C | transformed whole SUD C |

Figure 6C

S701　　　　　　S702　　　　　　S703　　　　　　S704

```
             ┌──────────┐   ┌──────────┐   ┌──────────┐   ┌──────────┐
             │Obtaining │   │Generating a│  │          │   │Storing the│
             │initial user│ │whole SUD │   │Splitting the│ │two or more│
  ┌───────┐  │data from a│  │based on the│ │SUD into two│ │SUD parts in│ ┌──────┐
  │ Start ├─▶│   user   ├─▶│initial user├─▶│or more SUD├─▶│different  ├─▶│ End  │
  └───────┘  │          │   │   data   │   │  parts   │   │storage   │   └──────┘
             │          │   │          │   │          │   │locations │
             └────┬─────┘   └────┬─────┘   └────┬─────┘   └────┬─────┘
                  ▼              ▼              ▼              ▼
             ┌──────────┐   ┌──────────┐   ┌──────────┐   ┌──────────┐
             │PIN; image;│  │          │   │          │   │ Security │
             │fingerprint;│ │Feature matrix││Holography │   │token; server│
             │  voice   │   │          │   │          │   │          │
             └──────────┘   └──────────┘   └──────────┘   └──────────┘
```

## Figure 7A

750

755

```
  ┌──────────────┐        ┌──────────┐           ┌────────┐
  │              │        │          │        ──▶│  752   │
  │Initial user data├────▶│   751    │───┐        └────────┘
  │              │        │          │   │        ╭────────╮
  └──────────────┘        └──────────┘   └───────▶│Security│
                                                   │ token  │
                                                   ╰────────╯
                                                         753
```

## Figure 7B

Start

S801 | Obtaining a first SUD part

S802 | Obtaining a second SUD part based on the first SUD part

S803 | Combining the first SUD part and the second SUD part to obtain a combined SUD

S803b | Comparing combined SUD with whole SUD

S804 | Obtaining live user data

S804b | Performing liveness test

S805 | Comparing the live user data and the combined SUD

S806 | Authenticate based on comparison?

No

Yes

Do not authenticate

End

Do authenticate

S807b

S807a

Figure 8A

750

756 | Live user data

752

751

Security token

753

Figure 8B

Europäisches
Patentamt

European
Patent Office

Office européen
des brevets

# EUROPEAN SEARCH REPORT

Application Number

EP 19 21 1667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/146315 A1 (NEWPORT SCIENT RES LLC [US]; CRANDELL JEFFREY L [US]) 3 December 2009 (2009-12-03) * paragraph [0016] - paragraph [0027] * * paragraph [0034] - paragraph [0038] * | 1-15 | INV. G06F21/32 |
| A | US 8 856 541 B1 (CHAUDHURY KRISHNENDU [US] ET AL) 7 October 2014 (2014-10-07) * column 19 - column 21 * | 5-8 | |
| A | KIM JUNGHOI ET AL: "Digital holographic security system based on random phase encoded reference beams and fingerprint identification", OPTICS COMMUNICATIONS, ELSEVIER, AMSTERDAM, NL, vol. 247, no. 4, 1 December 2004 (2004-12-01), pages 265-274, XP029613823, ISSN: 0030-4018, DOI: 10.1016/J.OPTCOM.2004.11.066 * 1. Introduction * | 11,12 | TECHNICAL FIELDS SEARCHED (IPC) G06F |
| A | HIROYUKI SUZUKI ET AL: "Experimental evaluation of fingerprint verification system based on double random phase encoding References and links", OPTICS EXPRESS, vol. 14, no. 5, 6 March 2006 (2006-03-06), pages 1755-1766, XP055362260, * 2. Review of hybrid authentication system that combines fingerprint verification with PIN verification * | 11,12 | |

The present search report has been drawn up for all claims

| Place of search | Date of completion of the search | Examiner |
|---|---|---|
| Munich | 14 May 2020 | Chabot, Pedro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 21 1667

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2020

| Patent document cited in search report | Publication date | Patent family member(s) | Publication date |
|---|---|---|---|
| WO 2009146315 A1 | 03-12-2009 | US 2009300737 A1<br>WO 2009146315 A1 | 03-12-2009<br>03-12-2009 |
| US 8856541 B1 | 07-10-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Labeled Faces in the Wild: A database for studying face recognition in unconstrained environments. **GARY B. HUANG ; MANU RAMESH ; TAMARA BERG ; ERIK LEARNED-MILLER.** Technical Report 07-49. University of Massachusetts, 2007

- HOLOGRAPHIC IMAGE SYNTHESIS UTILIZING THEORETICAL METHODS. *Appl. Phys. Lett.,* 1966, vol. 9, 405